# EUROPEAN PATENT SPECIFICATION

(11) **EP 3 492 443 B1**
(45) Date of publication and mention of the grant of the patent: **24.11.2021**
(21) Application number: 17897844.1
(22) Date of filing: 24.02.2017
(51) Int. Cl.: C05F 7/00, A01G 7/06, A01G 7/00, C05D 5/00

(54) **FERTILIZER FOR PLANT CULTIVATION COMPRISING LAUNDRY WASTEWATER, PLANT CULTIVATION METHOD USING SAME, AND METHOD FOR USING LAUNDRY WASTEWATER AS FERTILIZER FOR PLANT CULTIVATION**
DÜNGEMITTEL ZUR PFLANZENZUCHT MIT WÄSCHEABWASSER, PFLANZENZUCHTVERFAHREN DAMIT UND VERFAHREN ZUR VERWENDUNG VON WÄSCHEABWASSER ALS DÜNGEMITTEL ZUR PFLANZENZUCHT
ENGRAIS POUR LA CULTURE DE PLANTES COMPRENANT DES EAUX USÉES DE BLANCHISSERIE, PROCÉDÉ DE CULTURE DE PLANTES L'UTILISANT, ET PROCÉDÉ D'UTILISATION D'EAUX USÉES DE BLANCHISSERIE COMME ENGRAIS POUR LA CULTURE DE PLANTES

(43) Date of publication of application: 05.06.2019
(73) Proprietor: Miyamoto Corporation, Koga-shi, Ibaraki 306-0215 (JP)
(72) Inventor: MIYAMOTO, Takashi, Koga-shi Ibaraki 306-0215 (JP)
(74) Representative: Ter Meer Steinmeister & Partner
(86) International application number: PCT/JP2017/007141
(87) International publication number: WO 2018/154720

(56) References cited:
- AU-A4- 2010 100 131
- CN-A- 104 926 439
- CN-A- 104 926 439
- JP-A- 2002 234 723
- JP-A- 2002 234 723
- JP-A- 2014 090 895
- JP-B1- 5 312 663
- MISRA R K ET AL: "Reuse potential of laundry greywater for irrigation based on growth, water and nutrient use of tomato", JOURNAL OF HYDROLOGY, ELSEVIER, AMSTERDAM, NL, vol. 386, no. 1-4, 28 May 2010 (2010-05-28), pages 95-102, XP027038562, ISSN: 0022-1694 [retrieved on 2010-03-10]
- MISRA,R.K. et al.: "Reuse potential of laundry greywater for irrigation based on growth, water and nutrient use of tomato", Journal of Hydrology, vol. 386, no. 1-4, 2010, pages 95-102, XP027038562,

## Description

### Technical Field

The present invention relates to a fertilizer for plant cultivation composed of laundry wastewater containing magnesium hydroxide [Mg(OH)₂], a plant cultivation method using the fertilizer, and a method for using the laundry wastewater containing magnesium hydroxide as the fertilizer for plant cultivation.

### Background Art

Magnesium is one of the essential nutrients for plants, is a main component of chlorophyll, and plays an important role promoting absorption and movement of phosphoric acid in a plant body. Lack of magnesium in plants leads to yellow leaf surfaces, defoliation or withering.

However, magnesium in the soil decreases naturally by absorption into plant bodies, outflow due to rainfall and the like. Therefore, it is necessary to supply magnesium to the soil regularly via supplying a fertilizer.

As the fertilizers for supplying magnesium to the soil, magnesium-containing fertilizers such as magnesium oxide [MgO] fertilizer, magnesium hydroxide [Mg(OH)₂] fertilizer or magnesium sulfate [MgSO₄] fertilizer are conventionally used (Patent Documents 1-5).

### Prior Art Documents

### Patent Documents

Patent Document 1: JP 2004-244313 A
Patent Document 2: JP 2003-128484 A
Patent Document 3: JP 2003-095780 A
Patent Document 4: JP 2002-234723 A
Patent Document 5: JP 2001-233687 A
Patent Document 6: JP 5312663 B

Misra et. al (Journal of Hydrology, 386 (2010), 95-102), AU 2010 100 131 A4 and CN 104 926 439 further disclose fertilizer compositions based on laundry wastes.

### Summary of Invention

### Problems to be Solved by the Invention

Among the magnesium-containing fertilizers, magnesium hydroxide fertilizer is preferable since it effects as alkali content which modifies acidity of acid soil.

However, magnesium hydroxide fertilizer produced industrially is a granulated substance of magnesium hydroxide, and it is necessary to have a mechanical strength to an extent that it is not pulverized during transportation and preservation. On the other hand, it is also necessary to have disintegrating property that it is disintegrated, pulverized and dispersed in the soil soon after being fertilized. Therefore, it is not easy to have both the mechanical strength and disintegrating property at the same time. Further, costs and labor are needed to industrially produce, transport and preserve such a granulated substance of magnesium hydroxide.

### Means for Solving the Problems

The invention solves the above problem by effectively using laundry wastewater containing magnesium hydroxide [Mg(OH)₂] obtained after washing laundry with water and magnesium material containing metal magnesium (Mg) (hereinafter, it is only referred to as "magnesium material") as a main component. The scope of this invention encompasses a composition according to claim 1 and methods according to claims 5 and 6.

The inventors previously found that hydrogen generated by reaction between magnesium and water enhances an effect of surfactants as laundry detergent which removes dirt. Then, they obtained a patent regarding a cleaning aid item for laundry which is made by putting particles containing 50 wt% or more of a plurality of simple substances of metal magnesium (Mg) into a net and a washing method using the item (Patent Document 6).

The inventors found that, even in a case that washing is performed by using the magnesium material without using laundry detergent, an adequate cleaning effect can be obtained by hydrogen and magnesium hydroxide generated by reaction between water and the magnesium material [Mg+2H₂O→H₂+Mg(OH)₂] as well as found that the laundry wastewater can be effectively used as a fertilizer for plant cultivation, thereby they accomplished the invention.

### Effects of the Invention

By the invention, the laundry wastewater containing magnesium hydroxide [Mg(OH)₂] obtained after washing the laundry by using water and the magnesium material can be effectively used as a fertilizer for plant cultivation.

Further, Mg²⁺ ion to be absorbed in the plants can be economically and efficiently provided to the plants without problems that the industrially produced granulated substances of magnesium hydroxide may have such as pulverization during transportation and preservation or disintegration after fertilization.

### Brief Description of the Drawing

FIG. 1 is a perspective view illustrating an example of magnesium material in a particle form.
FIG. 2 is a perspective view illustrating an example of magnesium material in an inner surface layer form.

### Modes for Carrying out the Invention

Hereinafter, modes for carrying out the invention in the most appropriate manner will be explained in detail.

First, the inventors found that, even in a case that the laundry is washed by using water and the magnesium material without using laundry detergent, an adequate cleaning effect can be obtained by hydrogen and magnesium hydroxide generated by reaction between water and the magnesium material [Mg+2H₂O→H₂+Mg(OH)₂].

The cleaning effect of the magnesium material is thought to be obtained by the following effects;
1) effect that generated hydrogen permeates deeply into the fiber of the laundry,
2) effect that generated hydrogen emulsifies dirt, and
3) effect that generated magnesium hydroxide makes laundry liquid weak alkaline.

The washing method only using water as the washing liquid without using laundry detergent is economical since laundry detergent is not used. Further, it is preferable to wash cloths for people highly sensitive to the laundry detergent.

Further, the inventors found that the laundry wastewater after washing in such a way can be effectively used as the fertilizer for plant cultivation since hydrogen [H₂] and magnesium hydroxide [Mg(OH)₂] which are generated by reaction between water and the magnesium material [Mg+2H₂O→H₂+Mg(OH)₂] are dissolved in the wastewater, and dirt such as sebum and protein removed from the laundry is certainly included but no substance giving harmful effects on plants such as the laundry detergent is included, thereby they accomplished the invention.

For the composition of the magnesium material used for washing in the invention, it is preferable that simple substance of metal magnesium (Mg) is contained at a relatively high ratio in order to generate a more amount of hydrogen, since magnesium generates hydrogen by reacting with water in a room temperature relatively slowly, as described above. Specifically, simple substance of metal magnesium (Mg) is contained preferably at 50 wt% or more, more preferably at 80 wt% or more, and most preferably substantially 100 wt% ("substantially" means "a case that impurities which can not be removed completely by known and normal purification means adopted on production sites are excluded from a component of the magnesium material.").

Components which can be contained in the magnesium material other than metal magnesium (Mg), the main component, are as follows;
1) impurities such as iron (Fe), alminum (Al) and zinc (Zn) contained in magnesium ore or generated in a step of purification and processing of magnesium, and
2) substances which does not inhibit the above-mentioned first and the second effects by the generation of hydrogen, or the above-mentioned third effect to make the washing liquid weak alkaline.

Forms of the magnesium material used for washing in the invention may be the one of a plurality of particles put into a water-permeable net (hereinafter, it is also referred to as "particle form") or also may be the one of a layer formed on an inner surface of a main body of a washing container (hereinafter, it is also referred to as "inner surface layer form").

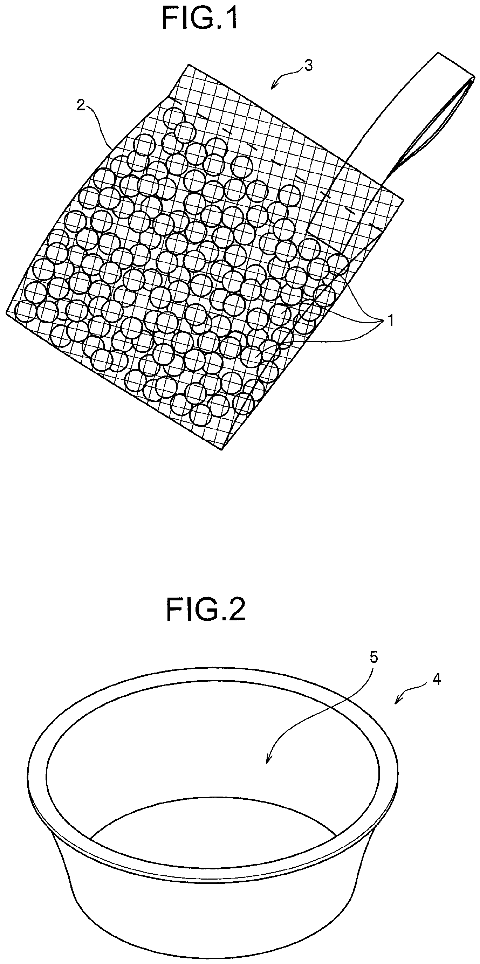

As an example of the magnesium material in a particle form, as shown in Fig. 1, a cleaning aid item for laundry 3 which is made such that a plurality of particles of the magnesium material 1 is put into a net bag 2 can be listed. Washing is performed by putting the cleaning aid item for laundry 3 into a washing container such as a washing tank together with the laundry and water.

As an example of the magnesium material in an inner surface layer form, as shown in Fig. 2, a washing container 4 which is made such that an inner surface of a main body of container 5 is formed of the magnesium material can be listed. Washing is performed by putting the laundry and water into the washing container 4.

Since the laundry wastewater in the invention obtained after washing the laundry using water and the magnesium material contains magnesium hydroxide [Mg(OH)₂], plants can be cultivated by reusing the laundry wastewater as a fertilizer effectively instead of the magnesium hydroxide [Mg(OH)₂] fertilizer.

The plant cultivation method in the invention gives an excellent effect that the plants can be safely and economically cultivated using the laundry wastewater effectively.

Further, plants such as vegetables cultivated using the laundry wastewater in the invention as a fertilizer contains abundant magnesium, which can improve lack of magnesium for people by eating such plants.

As methods of using the laundry wastewater in the invention obtained after washing the laundry using water and the magnesium material as a fertilizer for plant cultivation, it can be used at a home garden in each home, or it can also be used at a farm field in each farm. Further, the laundry wastewater stored in a storage facility can be collected and conveyed using vehicles such as tank trucks or the like and used in other areas. Further, the laundry wastewater collected, conveyed from each home or area using vehicles such as tank trucks and stored can be conveyed as ballast water for an oil tanker on the way home after having conveyed crude oil and oil, and used in other countries.

The invention is not limited to the above example, and various changes can be applied as far as it has substantially the same configuration and has the same effect.

### Reference Signs List

- 1.: Particles of magnesium material
- 2.: Net bag
- 3.: Cleaning aid item for laundry
- 4.: Washing container
- 5.: Inner surface of main body of container

## Claims

1. A fertilizer for plant cultivation composed of laundry wastewater, in which hydrogen [H₂] and magnesium hydroxide [Mg(OH)₂] are dissolved and which does not contain laundry detergent, obtained by washing laundry using water and magnesium material containing 50 wt% or more metal magnesium (Mg).

2. The fertilizer for plant cultivation according to claim 1, being **characterized in that** the magnesium material contains 100 wt% metal magnesium (Mg).

3. The fertilizer for plant cultivation according to claim 1 or 2, being **characterized in that** a form of the magnesium material is a plurality of particles put into a water-permeable net.

4. The fertilizer for plant cultivation according to claim 1 or 2, being **characterized in that** a form of the magnesium material is a layer formed on an inner surface of a main body of a washing container.

5. A plant cultivation method being **characterized in that** plants are cultivated using the fertilizer for plant cultivation according to any one of claims 1 to 4.

6. A method for using laundry wastewater being **characterized in that** laundry wastewater, in which hydrogen [H₂] and magnesium hydroxide [Mg(OH)₂] are dissolved and which does not contain laundry detergent, obtained by washing laundry using water and magnesium material containing 50 wt% or more metal magnesium (Mg) is used as a fertilizer for plant cultivation.

7. The method for using the laundry wastewater according to claim 6, being **characterized in that** the magnesium material contains 100 wt% metal magnesium (Mg).

8. The method for using the laundry wastewater according to claim 6 or 7, being **characterized in that** a form of the magnesium material is a plurality of particles put into a water-permeable net.

9. The method for using the laundry wastewater according to claim 6 or 7, being **characterized in that** a form of the magnesium material is a layer formed on an inner surface of a main body of a washing container.

## Patentansprüche

1. Düngemittel für den Pflanzenbau, bestehend aus Wäscheabwasser, in dem Wasserstoff [H₂] und Magnesiumhydroxid [Mg(OH)₂] gelöst sind und das kein Waschmittel enthält, erhalten durch Waschen von Wäsche unter Verwendung von Wasser und Magnesiummaterial, das 50 Gew.-% oder mehr metallisches Magnesium (Mg) enthält.

2. Düngemittel für den Pflanzenbau nach Anspruch 1, **dadurch gekennzeichnet, dass** das Magnesiummaterial 100 Gew.-% metallisches Magnesium (Mg) enthält.

3. Düngemittel für den Pflanzenbau nach Anspruch 1 oder 2, **dadurch gekennzeichnet, dass** eine Form des Magnesiummaterials eine Vielzahl von Partikeln ist, die in ein wasserdurchlässiges Netz eingebracht sind.

4. Düngemittel für den Pflanzenbau nach Anspruch 1 oder 2, **dadurch gekennzeichnet, dass** eine Form des Magnesiummaterials eine Schicht ist, die auf einer inneren Oberfläche eines Hauptkörpers eines Waschbehälters gebildet ist.

5. Pflanzenzuchtverfahren, **dadurch gekennzeichnet, dass** Pflanzen unter Verwendung des Düngers für die Pflanzenzucht nach einem der Ansprüche 1 bis 4 gezüchtet werden.

6. Verfahren zur Verwendung von Wäscheabwasser, **dadurch gekennzeichnet, dass** Wäscheabwasser, in dem Wasserstoff [H₂] und Magnesiumhydroxid [Mg(OH)₂] gelöst sind und das kein Waschmittel enthält, das durch Waschen von Wäsche unter Verwendung von Wasser und Magnesiummaterial, das 50 Gew.-% oder mehr metallisches Magnesium (Mg) enthält, erhalten wird, als Düngemittel für den Pflanzenbau verwendet wird.

7. Verfahren zur Verwendung des Wäscheabwassers nach Anspruch 6, **dadurch gekennzeichnet, dass** das Magnesiummaterial 100 Gew.-% Metallmagnesium (Mg) enthält.

8. Verfahren zur Verwendung des Wäscheabwassers nach Anspruch 6 oder 7, **dadurch gekennzeichnet, dass** eine Form des Magnesiummaterials eine Vielzahl von Partikeln ist, die in ein wasserdurchlässiges Netz gegeben werden.

9. Verfahren zur Verwendung des Wäscheabwassers nach Anspruch 6 oder 7, **dadurch gekennzeichnet, dass** eine Form des Magnesiummaterials eine Schicht ist, die auf einer inneren Oberfläche eines Hauptkörpers eines Waschbehälters gebildet ist.

## Revendications

1. Engrais pour la culture de plantes, composé d'eaux usées de blanchisserie, dans lesquelles sont dissous de l'hydrogène [H₂] et de l'hydroxyde de magnésium [Mg(OH)₂] et qui ne contiennent pas de détergent de blanchisserie, obtenues par lavage du linge à l'aide d'eau et d'une matière magnésienne contenant 50 % en poids ou plus de magnésium métallique (Mg).

2. Engrais pour la culture des plantes selon la revendication 1, **caractérisé en ce que** le matériau de magnésium contient 100 % en poids de magnésium métallique (Mg).

3. Engrais pour la culture de plantes selon la revendication 1 ou 2, **caractérisé en ce qu'**une forme du matériau de magnésium est une pluralité de particules placées dans un filet perméable à l'eau.

4. Engrais pour la culture de plantes selon la revendication 1 ou 2, **caractérisé en ce qu'**une forme du matériau de magnésium est une couche formée sur une surface interne d'un corps principal d'un récipient de lavage.

5. Procédé de culture de plantes étant **caractérisé en ce que** les plantes sont cultivées en utilisant l'engrais pour la culture de plantes selon l'une quelconque des revendications 1 à 4.

6. Procédé d'utilisation d'eaux usées de blanchisserie, **caractérisé en ce que** les eaux usées de blanchisserie, dans lesquelles de l'hydrogène [H₂] et de l'hydroxyde de magnésium [Mg(OH)₂] sont dissous et qui ne contiennent pas de détergent de blanchisserie, obtenues en lavant du linge à l'aide d'eau et de matériau de magnésium contenant 50 % en poids ou plus de magnésium métallique (Mg), sont utilisées comme engrais pour la culture de plantes.

7. Procédé d'utilisation des eaux usées de blanchisserie selon la revendication 6, étant **caractérisé en ce que** le matériau de magnésium contient 100 % en poids de magnésium métallique (Mg).

8. Procédé d'utilisation des eaux usées de blanchisserie selon la revendication 6 ou 7, **caractérisé en ce qu'**une forme du matériau de magnésium est une pluralité de particules placées dans un filet perméable à l'eau.

9. Procédé d'utilisation des eaux usées de blanchisserie selon la revendication 6 ou 7, **caractérisé en ce qu'**une forme du matériau de magnésium est une couche formée sur une surface interne d'un corps principal d'un récipient de lavage.
